# EUROPEAN PATENT APPLICATION

(11) **EP 4 553 572 A1**
(43) Date of publication of application: **14.05.2025**
(21) Application number: 24195513.7
(22) Date of filing: 21.08.2024
(51) Int. Cl.: G02F 1/35, G02F 1/37

(54) **TUNABLE DUV LASER SYSTEM USING ANGLE-DEPENDENT WAVELENGTH SELECTOR**

(30) Priority: 07.11.2023 US 202363596635 P
(71) Applicant: IISM INC., Sejong 30129 (KR)
(72) Inventor: Yang, Il Seung, 30124 Sejong (KR); Bae, Yun Mi, 30064 Sejong (KR); Kim, Yu Sic, 30092 Sejong (KR); Lee, Kwan Kyu, 30062 Sejong (KR); Kim, Youn Jin, 34011 Daejeon (KR); Bae, Chang Hyun, 30128 Sejong (KR); Park, Jong Min, 30153 Sejong (KR); Lee, Yun Ji, 30127 Sejong (KR)
(74) Representative: Patentanwälte Ruff, Wilhelm, Beier, Dauster & Partner mbB

(57) **Abstract**

A laser system according to an example of the present disclosure comprises: a supercontinuum laser that generates light with a visible wavelength; a wavelength selector comprising a filter whose angle is adjustable and configured to filter the wavelength of light incident from the supercontinuum laser to have a wavelength corresponding to the angle of the filter based on the angle of the filter; a compressor configured to compress the pulse width of light incident from the wavelength selector; and, a non-linear crystal configured to convert the wavelength of light incident from the compressor into an ultraviolet wavelength.

## Description

### [TECHNICAL FIELD]

The technical idea of the present disclosure relates to a tunable DUV laser system using an angle-dependent wavelength selector.

### [BACKGROUND ART]

### [PROBLEM TO BE SOLVED]

Industries often purchase and use lasers with specific wavelengths individually in order to select various wavelengths. However, because lasers are required to have different wavelengths depending on their use, a method of implementing a tunable laser by filtering a specific wavelength from a supercontinuum laser with a broad spectrum has been proposed. However, while there is high demand in industry for ultraviolet wavelengths of 200 to 400 nm, supercontinuum lasers have a wavelength of 410 to 2500 nm, which means the application of supercontinuum lasers is limited.

Meanwhile, it has been proposed to use a femtosecond pulse laser that can used in associating with a non-linear crystal to produce a laser with an ultraviolet wavelength. For example, a method of producing a laser with an ultraviolet wavelength by introducing a non-linear crystal into a titanium sapphire laser (Ti: Sapphire laser) and a femtosecond laser to double or triple the wavelength, or by using an optical parametric oscillator (OPO), etc. has been proposed.

However, the laser generated by the proposed method has a very weak intensity of wavelength of several hundred microwatts, and a femtosecond laser and an optimized OPO should be provided for each specific wavelength, which has the problem of increasing the overall cost of the laser system.

Therefore, the object of the present invention is to manufacture a laser with a deep ultraviolet (DUV) wavelength at a low cost by filtering a specific wavelength from a supercontinuum laser with a broad spectrum and converting the filtered wavelength into a deep ultraviolet wavelength, and to expand the scope of application of lasers.

### [MEANS FOR SOLVING THE PROBLEM]

In order to achieve the object above, a laser system according to an example of the present disclosure comprises: a supercontinuum laser that generates light with a visible wavelength; a wavelength selector comprising a filter whose angle is adjustable and configured to filter the wavelength of light incident from the supercontinuum laser to have a wavelength corresponding to the angle of the filter based on the angle of the filter; a compressor configured to compress the pulse width of light incident from the wavelength selector; and, a non-linear crystal configured to convert the wavelength of light incident from the compressor into an ultraviolet wavelength.

In a laser system according to an example of the present disclosure, the supercontinuum laser is configured to generate light with a pulse width of a 10⁻¹² second or less.

In a laser system according to an example of the present disclosure, the compressor is configured to compress the pulse width of light incident from the wavelength selector to a 10⁻¹⁵ second or less.

In a laser system according to an example of the present disclosure, the wavelength selector comprises a plurality of filters and is configured to filter the wavelength of light incident from the supercontinuum laser based on a combination of the angles of the plurality of filters.

A laser system according to an example of the present disclosure comprises: a supercontinuum laser that generates light with an infrared wavelength; a wavelength selector comprising a filter whose angle is adjustable and configured to filter the wavelength of light incident from the supercontinuum laser to have a wavelength corresponding to the angle of the filter based on the angle of the filter; and, one or more non-linear crystals configured to convert the wavelength of light incident from the wavelength selector into an ultraviolet wavelength.

In a laser system according to an example of the present disclosure, the supercontinuum laser is configured to generate light with a pulse width of a 10⁻¹⁵ second or less.

In a laser system according to an example of the present disclosure, the one or more non-linear crystals comprise: a first non-linear crystal configured to convert the wavelength of light incident from the wavelength selector into a visible wavelength; and a second non-linear crystal configured to convert the wavelength of light incident from the first non-linear crystal into an ultraviolet wavelength.

In a laser system according to an example of the present disclosure, the wavelength selector comprises a plurality of filters and is configured to filter the wavelength of light incident from the supercontinuum laser based on a combination of the angles of the plurality of filters.

### [EFFECT OF THE INVENTION]

A laser system according to an example of the present disclosure can expand the scope of laser applications by filtering a specific wavelength from a supercontinuum laser having a broad spectrum using a wavelength selector comprising a filter whose angle is adjustable, and converting the filtered wavelength into a deep ultraviolet wavelength using a non-linear crystal.

A laser system according to an example of the present disclosure can expand the scope of laser applications by being capable of tunable filtering of a specific wavelength from a supercontinuum laser having a wavelength of 400 to 600 nm and a pulse width of tens of picoseconds, and converting the filtered wavelength into a deep ultraviolet wavelength of 200 to 280 nm using a compressor and a non-linear crystal.

A laser system according to an example of the present disclosure can expand the scope of laser applications by being capable of tunable filtering of a specific wavelength from a supercontinuum laser having a wavelength of 800 to 1000 nm and a pulse width of tens of femtoseconds, and converting the filtered wavelength into a deep ultraviolet wavelength of 200 to 280 nm using one or more non-linear crystals.

However, the effects of the present invention are not limited to the above and can be expanded in various ways without departing from the spirit and scope of the present invention.

### [BRIEF DESCRIPTION OF THE DRAWINGS]

Fig. 1 is a block diagram showing a laser system according to an example of the present disclosure.
FIG. 2 is a drawing showing the spectrum of light generated by the laser system of Fig. 1.
Fig. 3 is a drawing showing a wavelength selector according to an example of the present disclosure.
Fig. 4 is a block diagram showing a laser system according to an example of the present disclosure.
Fig. 5 is a drawing showing the spectrum of light generated by the laser system of Fig. 4.

### [DETAILED DESCRITPION TO CARRY OUT THE INVENTION]

Hereinafter, examples of the present disclosure will be described in detail with reference to the attached drawings. The description below is only intended to specify examples and is not intended to limit or restrict the scope of the present disclosure. What a person having ordinary skill in the art to which the present disclosure pertains can easily infer from the detailed description of the invention and examples thereof should be construed as falling within the scope of the present disclosure.

The terms used in the present disclosure are general terms widely used in the technical field of the present disclosure, but the meaning of the terms used in the present disclosure may vary depending on the intention of a skilled person in the art, precedents, or the emergence of new technology. Some terms may be arbitrarily selected by the applicant, in which case the meaning of the terms will be explained in detail. Terms used in the present disclosure should be interpreted to have not only their literal meaning, but also their meaning according to the overall context of the specification.

Terms such as `consist of or 'comprise' used in the present disclosure should not be construed to mean that all of the components or steps described in the specification are necessarily included, and it should be construed that the case where some components or steps are not included and the case where additional components or steps are included are to be also indicated by the terms.

Terms containing an ordinal number such as 'first' or 'second' used in the present disclosure may be used to describe various components or steps, but the components or steps should not be limited by the ordinal number. Terms containing an ordinal number should be interpreted only to distinguish one component or step from other components or steps.

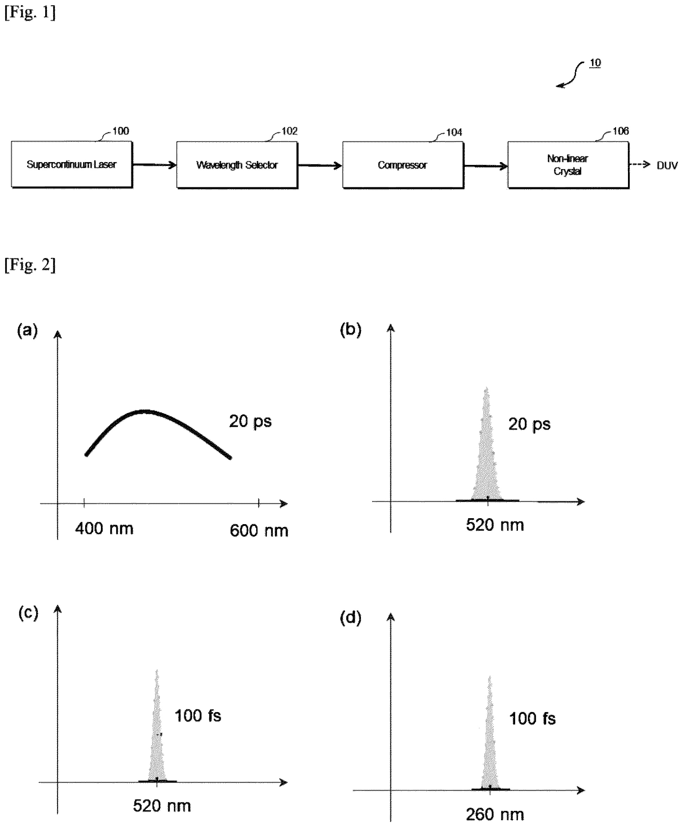

**Fig. 1** **is a block diagram showing a laser system according to an example of the present disclosure.** Referring to Fig. 1, the laser system 10 may comprise a supercontinuum laser 100, a wavelength selector 102, a compressor 104, and a non-linear crystal 106. The laser system 10 may be equipped with a supercontinuum laser 100, a wavelength selector 102, a compressor 104, and a non-linear crystal 106 in this order. Light generated from the supercontinuum laser 100 may sequentially be incident on the wavelength selector 102, the compressor 104, and the non-linear crystal 106.

The supercontinuum laser 100 may generate light with a broad spectrum in the visible to infrared regions. For example, the supercontinuum laser 100 may be referred to as a white laser. The supercontinuum laser 100 may generate a pulse laser having constant wavelength and pulse width. For example, the supercontinuum laser 100 may be a supercontinuum picosecond laser that generates light with a pulse width of a 10⁻¹² second or less.

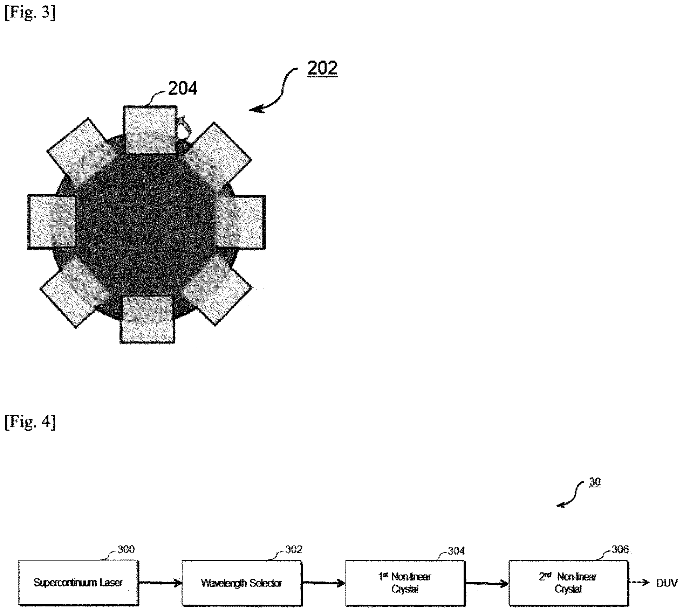

The wavelength selector 102 may comprise a filter whose angle is adjustable. The wavelength selector 102 may filter the wavelength of light incident on the wavelength selector 102 to have a wavelength corresponding to the angle of the filter. The structure of the wavelength selector 102 will be described in detail with reference to Fig. 3.

The wavelength selector 102 of Fig. 1 may have the same structure as the wavelength selector 202 of Fig. 3. The wavelength selector 202 may be equipped with a motor (not shown) and a filter 204. The wavelength selector 202 may be controlled by a controller. The controller may receive a center wavelength from a user device. The controller may cause the motor of the wavelength selector 202 to rotate the filter 204 to an angle corresponding to the received center wavelength. For example, the angular rotation may be between 0 degrees and 90 degrees.

The wavelength selector 202 may be equipped with a plurality of filters 204. The controller may calculate a combination of the angles of the plurality of filters 204 corresponding to the received wavelength. The wavelength selector 202 may cause the motor to rotate the plurality of filters 204 to an angle corresponding to the received center wavelength. The wavelength selector 202 may filter the wavelength of light incident on the wavelength selector 202 to have a wavelength corresponding to the combination of the angles of the plurality of filters 204.

Returning to Fig. 1, light generated from the supercontinuum laser 100 may be incident on the wavelength selector 102. The supercontinuum laser 100 may generate light with a visible wavelength. The wavelength selector 102 may filter the wavelength of light incident from the supercontinuum laser 100 to have a wavelength corresponding to the angle of the filter. For example, the supercontinuum laser 100 may generate light having a visible wavelength of about 400 to 600 nm and a pulse width of tens of picoseconds or less (10⁻¹² seconds or less). The wavelength selector 102 may filter the wavelength of light incident from the supercontinuum laser 100 to have a wavelength of about 520 nm.

Since the supercontinuum laser 100 has a broad spectrum, and the wavelength selector 102 may filter the wavelength of light incident from the supercontinuum laser 100 to have a wavelength corresponding to the angle of the filter, there is an advantage of tunable generation of a laser having a specific wavelength depending on its use. Meanwhile, there may be high demand in industry for lasers having ultraviolet wavelengths. Therefore, the scope of applications of laser systems can be expanded by converting the wavelength of the laser generated by the wavelength selector 102 into an ultraviolet wavelength.

A laser system 10 according to an example of the present disclosure may further comprise a compressor 104 and a non-linear crystal 106 in order to generate a laser with an ultraviolet wavelength. The compressor 104 may compress the pulse width of incident light. For example, the compressor 104 may be a prismatic compressor. A prism compressor may compress the pulse width by overlapping the rear part of the pulse with the front part of the pulse. In one example, light with a pulse width of tens of picoseconds or less (10⁻¹² seconds or less) may be incident on the compressor 104 from the wavelength selector 102. The compressor 104 may compress the pulse width of light incident on the compressor 104 to hundreds of femtoseconds or less (10⁻¹⁵ seconds or less). Light having a pulse width of hundreds of femtoseconds or less may meet the conditions for being incident on the non-linear crystal 106.

The non-linear crystal 106 may convert the wavelength of incident light. For example, the non-linear crystal 106 may be BBO, KTP, LiNb03, LilnS2, KDP, KTA, etc. The non-linear crystal 106 may convert the wavelength of incident light by doubling or tripling the wavelength. For example, light with a visible wavelength may be incident on the non-linear crystal 106 from the compressor 104. The non-linear crystal 106 may double light with a visible wavelength and convert it to have a deep ultraviolet (DUV) wavelength, or triple light with a visible wavelength and convert it to have a deep ultraviolet (DUV) wavelength.

A laser system 10 according to an example of the present disclosure can expand the scope of laser applications by filtering light having a specific wavelength from the supercontinuum laser 100 having a broad spectrum using the wavelength selector 102 comprising a filter whose angle is adjustable, and converting the wavelength of the filtered light into a deep ultraviolet (DUV) wavelength using the compressor 104 and the non-linear crystal 106.

**FIG. 2** **is a drawing showing the spectrum of light generated by the laser system of** **Fig. 1**. Fig. 2(a) may show the spectrum of light generated by the supercontinuum laser 100 of Fig. 1. The supercontinuum laser 100 may generate light having constant wavelength and pulse width. For example, the supercontinuum laser 100 may generate light with a visible wavelength corresponding to about 400 to 600 nm and may generate light having a pulse width of about 20 picoseconds. Light generated by the supercontinuum laser 100 may be incident on the wavelength selector 102.

Fig. 2(b) may show the spectrum of light filtered by the wavelength selector 102 of Fig. 1. The wavelength selector 102 may filter the wavelength of light incident from the supercontinuum laser 100 to have a wavelength corresponding to the angle of the filter. For example, the wavelength selector 102 may filter a wavelength of about 400 to 600 nm incident from the supercontinuum laser 100 to have a wavelength of about 520 nm. The light filtered by the wavelength selector 102 may have a pulse width of about 20 picoseconds, which is the same as that of the supercontinuum laser 100. In Fig. 2(b), the wavelength of the light filtered by the wavelength selector 102 is shown to be about 520 nm, but it is not limited thereto, and the wavelength of the light filtered by the wavelength selector 102 may be tuned to a value belonging to the spectrum of the supercontinuum laser 100. The light filtered by the wavelength selector 102 may be incident on the compressor 104.

Fig. 2(c) may show the spectrum of light filtered by the compressor 104 of Fig. 1. The compressor 104 may compress the pulse width of the light filtered by the wavelength selector 102. The compressor 104 may compress the pulse width of the light filtered by the wavelength selector 102 from about 20 picoseconds to about 100 femtoseconds. Light having a pulse width of hundreds of femtoseconds or less may meet the conditions for being incident on the non-linear crystal 106.

Fig. 2(d) may show the spectrum of light filtered by the non-linear crystal 106 of Fig. 1. The non-linear crystal 106 may convert the wavelength of light incident from the compressor 104 into a deep ultraviolet wavelength. The non-linear crystal 106 may convert the wavelength of light incident from the compressor 104 from about 520 nm to about 260 nm. In Fig. 2(d), the wavelength of the light converted by the non-linear crystal 106 is shown to be about 260 nm, but it is not limited thereto, and the wavelength of the light converted by the non-linear crystal 106 may be tuned to a value belonging to the deep ultraviolet region (for example, 200 to 280 nm).

Accordingly, a laser system 10 according to an example of the present disclosure can expand the scope of laser applications by being capable of tunable filtering of a specific wavelength from the supercontinuum laser 100 having a wavelength of 400 to 600 nm and a pulse width of tens of picoseconds using the wavelength selector 102, and converting the wavelength of the filtered light into a deep ultraviolet wavelength of 200 to 280 nm using the compressor 104 and the non-linear crystal 106.

**Fig. 4** **is a block diagram showing a laser system according to an example of the present disclosure.** Referring to Fig. 4, the laser system 30 may comprise a supercontinuum laser 300, a wavelength selector 302, a first non-linear crystal 304, and a second non-linear crystal 306. The laser system 30 may be equipped with a supercontinuum laser 300, a wavelength selector 302, a first non-linear crystal 304, and a second non-linear crystal 306 in this order. Light generated from the supercontinuum laser 300 may sequentially be incident on the wavelength selector 302, the first non-linear crystal 304, and the second non-linear crystal 306.

The supercontinuum laser 300 may generate light with a broad spectrum in the visible to infrared regions. For example, the supercontinuum laser 300 may be referred to as a white laser. The supercontinuum laser 300 may generate a pulse laser having constant wavelength and pulse width. For example, the supercontinuum laser 300 may be a supercontinuum femtosecond laser that generates light with a pulse width of a 10⁻¹⁵ second or less.

The wavelength selector 302 may comprise a filter whose angle is adjustable. The wavelength selector 302 may filter the wavelength of light incident on the wavelength selector 302 to have a wavelength corresponding to the angle of the filter. The wavelength selector 302 may comprise a motor and a filter, and the wavelength selector 302 may be controlled by a controller. The controller may receive a center wavelength from a user device. The controller may cause the motor of the wavelength selector 302 to rotate the filter to an angle corresponding to the received center wavelength. For example, the angular rotation may be between 0 degrees and 90 degrees. The wavelength selector 302 may be equipped with a plurality of filters 204. The controller may calculate a combination of the angles of the plurality of filters corresponding to the received wavelength. The wavelength selector 302 may cause the motor to rotate the plurality of filters to an angle corresponding to the received center wavelength. The wavelength selector 302 may filter the wavelength of light incident on the wavelength selector 302 to have a wavelength corresponding to the combination of the angles of the plurality of filters.

Light generated from the supercontinuum laser 300 may be incident on the wavelength selector 302. The supercontinuum laser 300 may generate light with a visible wavelength. The wavelength selector 302 may filter the wavelength of light incident from the supercontinuum laser 300 to have a wavelength corresponding to the angle of the filter. For example, the supercontinuum laser 300 may generate light having an infrared wavelength of about 800 to 1000 nm and a pulse width of tens of femtoseconds or less (10⁻¹⁵ seconds or less). The wavelength selector 302 may filter the wavelength of light incident from the supercontinuum laser 300 to have a wavelength of about 900 nm.

Since the supercontinuum laser 300 has a broad spectrum, and the wavelength selector 302 may filter the wavelength of light incident from the supercontinuum laser 300 to have a wavelength corresponding to the angle of the filter, there is an advantage of tunable generation of a laser having a specific wavelength depending on its use. Meanwhile, there may be high demand in industry for lasers having ultraviolet wavelengths. Therefore, the scope of applications of laser systems can be expanded by converting the wavelength of the laser filtered by the wavelength selector 302 into an ultraviolet wavelength.

A laser system 30 according to an example of the present disclosure may further comprise one or more non-linear crystals in order to generate a laser with an ultraviolet wavelength. The one or more non-linear crystals may convert the wavelength of light filtered by the wavelength selector 302 into a deep ultraviolet wavelength. The one or more non-linear crystals may comprise a first non-linear crystal 304 and a second non-linear crystal 306. The first non-linear crystal 304 and the second non-linear crystal 306 may convert the wavelength of incident light by doubling or tripling the wavelength.

The first non-linear crystal 304 may convert light incident from the wavelength selector 302 to have a visible wavelength. Light whose wavelength has been converted by the first non-linear crystal 304 may be incident on the second non-linear crystal 306. The second non-linear crystal 306 may convert the visible wavelength of light incident from the first non-linear crystal 304 into a deep ultraviolet wavelength. For example, the first non-linear crystal 304 and the second non-linear crystal 306 may include any one of BBO, KTP, LiNb03, LilnS2, KDP, and KTA, or a combination thereof.

A laser system 10 according to an example of the present disclosure can expand the scope of laser applications by filtering light having a specific wavelength from the supercontinuum laser 100 having a broad spectrum using the wavelength selector 102 comprising a filter whose angle is adjustable, and converting the wavelength of the filtered light into a deep ultraviolet (DUV) wavelength using the compressor 104 and the non-linear crystal 106.

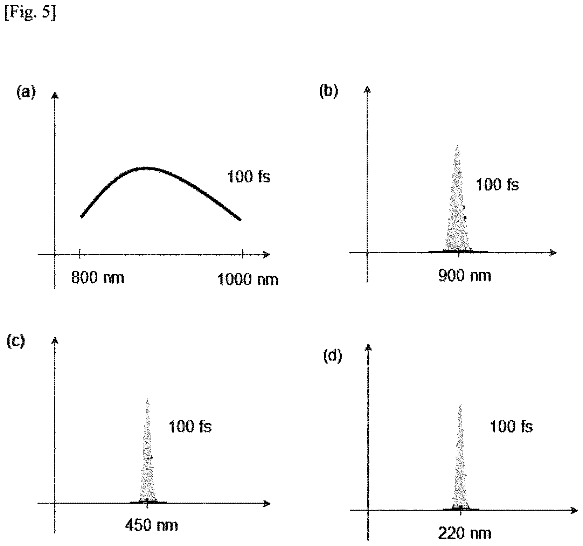

**Fig. 5** **is a drawing showing the spectrum of light generated by the laser system of** **Fig. 4****.** Fig. 5(a) may show the spectrum of light generated by the supercontinuum laser 300 of Fig. 4. The supercontinuum laser 300 may generate light having constant wavelength and pulse width. For example, the supercontinuum laser 300 may generate light having a wavelength of about 800 to 1000 nm and a pulse width of about 100 femtoseconds. Light generated by the supercontinuum laser 300 may be incident on the wavelength selector 302.

Fig. 5(b) may show the spectrum of light filtered by the wavelength selector 302 of Fig. 4. The wavelength selector 302 may filter the wavelength of light incident from the supercontinuum laser 300 to have a wavelength corresponding to the angle of the filter. For example, the wavelength selector 302 may filter a wavelength of about 800 to 1000 nm incident from the supercontinuum laser 300 to have a wavelength of about 900 nm. The light filtered by the wavelength selector 302 may have a pulse width of about 100 femtoseconds, which is the same as that of the supercontinuum laser 300. In Fig. 5(b), the wavelength of the light filtered by the wavelength selector 302 is shown to be about 900 nm, but it is not limited thereto, and the wavelength of the light filtered by the wavelength selector 302 may be tuned to a value belonging to the spectrum of the supercontinuum laser 300. The light filtered by the wavelength selector 302 may be incident on the first non-linear crystal 304.

Fig. 5(c) may show the spectrum of light generated by the first non-linear crystal 304 of Fig. 4. The first non-linear crystal 304 may convert the wavelength of the light filtered by the wavelength selector 302. The first non-linear crystal 304 may convert the infrared wavelength filtered by the wavelength selector 302 into a visible wavelength. For example, the first non-linear crystal 304 may convert the wavelength filtered by the wavelength selector 302 from about 900 nm to about 450 nm. In Fig. 5(c), the wavelength of the light converted by the first non-linear crystal 304 is shown to be about 450 nm, but it is not limited thereto, and the wavelength of the light converted by the first non-linear crystal 304 may be tuned to a value belonging to the visible region (for example, 380 to 780 nm).

Fig. 5(d) may show the spectrum of light generated by the second non-linear crystal 306 of Fig. 4. The second non-linear crystal 306 may convert the wavelength of the light converted by the first non-linear crystal 304 once again. The second non-linear crystal 306 may convert the visible wavelength of the light converted by the first non-linear crystal 304 into a deep ultraviolet wavelength. For example, the second non-linear crystal 306 may convert the wavelength converted by the first non-linear crystal 304 from about 450 nm to about 220 nm. In Fig. 5(d), the wavelength of the light converted by the second non-linear crystal 306 is shown to be about 220 nm, but it is not limited thereto, and the wavelength of the light converted by the second non-linear crystal 306 may be tuned to a value belonging to the deep ultraviolet region (for example, 200 to 280 nm).

Accordingly, a laser system 30 according to an example of the present disclosure can expand the scope of laser applications by being capable of tunable filtering of a specific wavelength from the supercontinuum laser 300 having a wavelength of 800 to 1000 nm using the wavelength selector 302, and converting the wavelength of the filtered light into a deep ultraviolet wavelength of 200 to 280 nm using the first non-linear crystal 304 and the second non-linear crystal 306.

The examples have been disclosed in the drawings and specification as above. Although the examples have been described in the present specification using specific terms, they are only used for the purpose of explaining the technical idea of the present disclosure but not used to limit the meaning thereof or scope of the present disclosure as set forth in the claims. Therefore, a skilled person in the art will understand that various modifications and other equivalent examples are possible from them. Thus, the true scope of technical protection of the present disclosure should be determined by the technical idea of the patent claims attached.

### [DESCRIPTION OF REFERENCE NUMERALS]

10: laser system
100: supercontinuum laser
102: wavelength selector
104: compressor
106: non-linear crystal
202: wavelength selector
204: filter
30: laser system
300: supercontinuum laser
302: wavelength selector
304: first non-linear crystal
306: second non-linear crystal

## Claims

1. A laser system comprising:
a supercontinuum laser that generates light with a visible wavelength;
a wavelength selector comprising a filter whose angle is adjustable and configured to filter the wavelength of light incident from the supercontinuum laser to have a wavelength corresponding to the angle of the filter based on the angle of the filter;
a compressor configured to compress the pulse width of light incident from the wavelength selector; and,
a non-linear crystal configured to convert the wavelength of light incident from the compressor into an ultraviolet wavelength.

2. The laser system according to claim 1,
wherein the supercontinuum laser is configured to generate light with a pulse width of a 10⁻¹² second or less.

3. The laser system according to claim 2,
wherein the compressor is configured to compress the pulse width of light incident from the wavelength selector to a 10⁻¹⁵ second or less.

4. The laser system according to claim 1,
wherein the wavelength selector comprises a plurality of filters and is configured to filter the wavelength of light incident from the supercontinuum laser based on a combination of the angles of the plurality of filters.

5. A laser system comprising:
a supercontinuum laser that generates light with an infrared wavelength;
a wavelength selector comprising a filter whose angle is adjustable and configured to filter the wavelength of light incident from the supercontinuum laser to have a wavelength corresponding to the angle of the filter based on the angle of the filter; and,
one or more non-linear crystals configured to convert the wavelength of light incident from the wavelength selector into an ultraviolet wavelength.

6. The laser system according to claim 5,
wherein the supercontinuum laser is configured to generate light with a pulse width of a 10⁻¹⁵ second or less.

7. The laser system according to claim 5,
wherein the one or more non-linear crystals comprise:
a first non-linear crystal configured to convert the wavelength of light incident from the wavelength selector into a visible wavelength; and
a second non-linear crystal configured to convert the wavelength of light incident from the first non-linear crystal into an ultraviolet wavelength.

8. The laser system according to claim 5,
wherein the wavelength selector comprises a plurality of filters and is configured to filter the wavelength of light incident from the supercontinuum laser based on a combination of the angles of the plurality of filters.
